**Europäisches Patentamt**

**European Patent Office**

**Office européen des brevets**

(19)

(11) Veröffentlichungsnummer: **0 035 221**
**A1**

(12) # EUROPÄISCHE PATENTANMELDUNG

(21) Anmeldenummer: **81101326.7**

(22) Anmeldetag: **24.02.81**

(51) Int. Cl.³: **G 02 B 7/26**

(30) Priorität: **29.02.80 DE 3007828**

(43) Veröffentlichungstag der Anmeldung: **09.09.81**
**Patentblatt 81/36**

(84) Benannte Vertragsstaaten: **FR GB**

(71) Anmelder: **SIEMENS AKTIENGESELLSCHAFT Berlin
und München, Postfach 22 02 61,
D-8000 München 22 (DE)**

(72) Erfinder: **Auracher, Franz, Dr., Stapferstrasse 4,
D-8000 München 60 (DE)**
Erfinder: **Zeitier, Karl-Heinz, Oertlinweg 1,
D-8000 München 90 (DE)**

(54) **Verzweigerelement und Verfahren zu seiner Herstellung.**

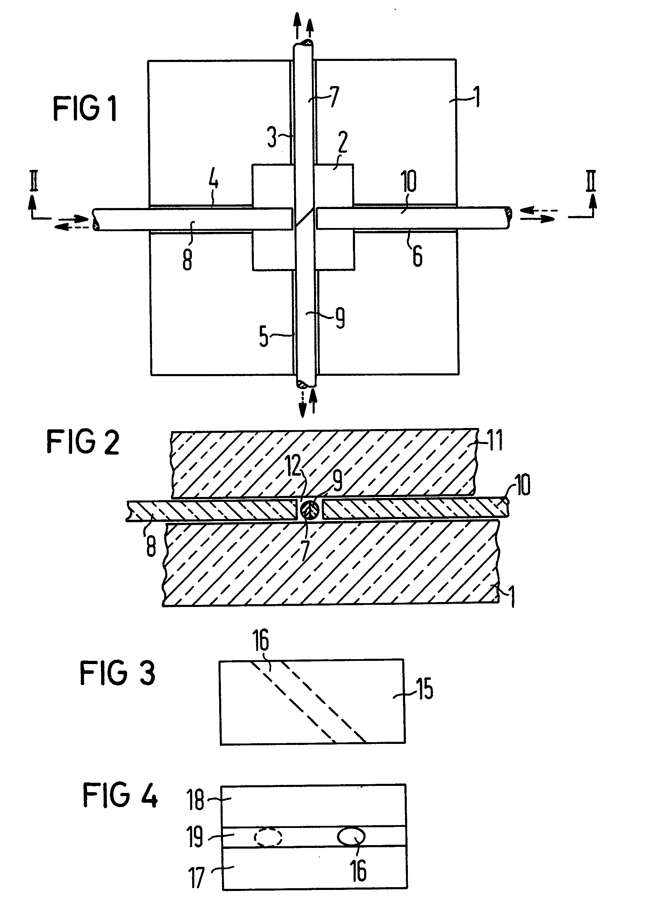

(57) Verzweigerelemente zum Verteilen von Licht aus einem zuführenden Lichtwellenleiter auf wegführende Lichtwellenleiter bei faseroptischen Kommunikationssystemen sollen auch bei Verwendung von Gradientenindexfasern geringe Einfügeverluste aufweisen und darüber hinaus einfach im Aufbau und in der Herstellung sein, so daß sie serienmäßig und kostengünstig hergestellt werden können. Erfindungsgemäß wird diese Aufgabe dadurch gelöst, daß zwei Lichtwellenleiter (7, 9) mit ihren unter annähernd 45° geschliffenen und polierten Stirnflächen, von denen mindestens eine teilverspiegelt ist, auf Stoß zusammengefügt sind, daß im Bereich der Stoßstelle an den Außendurchmesser dieser Lichtwellenleiter (7, 9) senkrecht zu deren Achsen mindestens ein weiterer Lichtwellenleiter (8, 10) anstoßen und mit jenen mit einem transparenten Kleber verbunden sind. Bei der Herstellung derartiger Verzweigerelemente kann zur Positionierung der Lichtwellenleiter (7 bis 10) eine Form mit Führungsgräben (3 bis 6) verwendet werden (Fig. 1).

SIEMENS AKTIENGESELLSCHAFT
Berlin und München

Unser Zeichen
VPA 80 P 7014 E

0035221

## Verzweigerelement und Verfahren zu seiner Herstellung.

Die vorliegende Erfindung betrifft ein Verzweigerelement zum Verteilen von Licht aus einem zuführenden Lichtwellenleiter auf wegführende Lichtwellenleiter und Verfahren zu seiner Herstellung.

In Lichtwellenleiter-Übertragungssystemen ist es oftmals notwendig, an bestimmten Stellen einen Teil der optischen Leistung aus einem Lichtwellenleiter auszukoppeln oder in diesen zusätzlich optische Leistung einzukoppeln, z.B. um einen Teilnehmer zu versorgen, Signale von einem Teilnehmer in eine Übertragungsleitung einzuspeisen oder um den Signalpegel in einer Leitung zu messen.

Es sind bereits Verteilerelemente bekannt, bei denen eine Kunststoffgabel verwendet wird, um Licht aus einem Lichtwellenleiter auf zwei Lichtwellenleiter zu verteilen. Weiterhin ist ein Verzweigerelement bekannt, bei dem zwei Lichtwellenleiter Stoß auf Stoß mit kleinem seitlichen Versatz aneinanderstoßen, so daß an der Stoßstelle ein Teil des Lichtes in einen Kunststoff-Wellenleiter ausgekoppelt werden kann. Beide Verzweigerelemente benötigen Kunststoff-Wellenleiter aus einem alterungsbeständigen Material. Sie zeigen bei Verwendung von Gradientenindexfasern unerwünschte Einfügeverluste, weil bei der Gradientenindexfaser der Akzeptanzwinkel von der Achse zum Mantel hin abnimmt, während die Kunststoff-Wellenleiter einen konstanten Akzeptanzwinkel über dem Querschnitt haben. Auch beim seitlichen Versatz der Lichtwellenleiter entstehen bei der Gradientenindexfaser höhere Verluste als bei der Stufenindexfaser.

Gdl 1 Bla / 12.2.1980

Der vorliegenden Erfindung liegt die Aufgabe zugrunde, ein Verzweigerelement der eingangs genannten Art anzugeben, das sowohl für Stufenindex- als auch für Gradientenindexfasern kleine Einfügeverluste besitzt und darüber hinaus einfach im Aufbau und in der Herstellung ist, so daß es serienmäßig und kostengünstig hergestellt werden kann.

Diese Aufgabe wird erfindungsgemäß dadurch gelöst, daß zwei Lichtwellenleiter mit ihren unter annähernd 45° geschliffenen und polierten Stirnflächen fluchtend auf Stoß zusammengefügt sind, wobei zumindest eine Stirnfläche teilverspiegelt ist, daß im Bereich der Stoßstelle etwa in einer Ebene, die durch die Achsen der Lichtwellenleiter und die Flächennormalen der Stirnflächen aufgespannt ist, senkrecht zu den Achsen zumindest ein weiterer Lichtwellenleiter an den Außendurchmesser der beiden Lichtwellenleiter anstößt und mit diesen mit transparentem Kleber verbunden ist.

Als Lichtwellenleiter können dabei sowohl Stufenindex- als auch Gradientenindexfasern verwendet werden. Bei diesem erfindungsgemäßen Verzweigerelement treten auch bei Verwendung von Gradientenindexfasern keine zusätzlichen Verluste in den beiden fluchtenden Durchgangs-Lichtwellenleitern auf. Durch Ausfüllen der verbleibenden Zwischenräume zwischen den Durchgangs-Lichtwellenleitern und den Lichtwellenleitern für die Aus- bzw. Einkopplung mit einem transparenten Kleber werden auch bei der Ein- bzw. Auskopplung die Verluste klein gehalten. Durch Verwenden von Fasern mit dünnem Mantel lassen sich bei diesem erfindungsgemäßen Verzweigerelement die Verluste bei der Ein- bzw. Auskopplung weiter verringern.

0035221

80 P 7014 E

Ein vorteilhaftes Verfahren zur Herstellung eines derartigen Verzweigerelementes besteht darin, daß zwei Lichtwellenleiter an je einem Ende unter 45° geschliffen und poliert werden, daß zumindest eine der so gebildeten Stirnflächen teilverspiegelt wird, daß die beiden Lichtwellenleiter mit ihren Achsen fluchtend auf Stoß zusammengefügt werden, daß senkrecht zu den Achsen in der durch diese und die Flächennormalen der Stirnflächen aufgespannten Ebene mindestens ein weiterer Lichtwellenleiter an den Außendurchmesser der beiden Lichtwellenleiter im Bereich der Stirnflächen angestoßen wird und daß die Verbindungsstellen zwischen den Lichtwellenleitern mit einem transparenten Kleber vergossen werden.

Um das Positionieren der Lichtwellenleiter zu erleichtern, wird eine Form mit entsprechenden Führungsgräben verwendet. Diese können z.B. fotolithografisch in einer lichtempfindlichen Kunststoff-Folie (z.B. Riston) oder durch Naßätzen von Metallgräben oder auch durch Vorzugsätzen einer Siliziumscheibe erzeugt werden. Ebenso können die Führungsgräben durch Einpressen eines Stempels in ein thermoplastisches Material hergestellt werden.

In Weiterbildung des erfindungsgemäßen Verfahrens ist vorgesehen, daß zum Herstellen der unter 45° geschliffenen Stirnflächen eine Halterung aus zwei Glasplatten verwendet wird, zwischen denen die Lichtwellenleiter in Führungsnuten einer Kunststoff-Folie eingespannt sind. Die aus dieser Halterung herausragenden Enden des Lichtwellenleiters werden bis auf die Außenfläche der Halterung herabgeschliffen, poliert bzw. zum Teil auch teilverspiegelt. Diese Außenfläche bildet dabei eine große Auflagefläche zum Schleifen und garantiert ein genaues Einhalten der geforderten Winkel. Die Führungsnuten im Kunststoff können wiederum mittels eines fotolithografischen Prozesses hergestellt werden.

Ein Ausführungsbeispiel des erfindungsgemäßen Verzweigerelementes sowie Hilfsmittel zu seiner Herstellung werden anhand von vier Figuren näher beschrieben und erläutert.   Dabei zeigen

Fig.1   in Draufsicht den unteren Teil einer Form zum Zusammensetzen der Lichtwellenleiter sowie die darin eingelegten Lichtwellenleiter;

Fig.2   zeigt einen Schnitt entlang der Linie II-II der Fig.1, jedoch mit Deckplatte; ·

Fig.3   in zwei Ansichten eine Halterung zum winkelge-
und 4   treuen Schleifen der Lichtwellenleiter-Stirnflächen.

In Fig.1 ist ein Substrat 1 dargestellt, das beispielsweise aus Glas besteht. · In diesem Substrat befindet sich eine quadratische Aussparung 2, in die vier Führungsgräben 3 bis 6 einmünden.   Die Führungsgräben und die Aussparung haben eine Tiefe entsprechend dem Durchmesser der Lichtwellenleiter.   In die Führungsgräben 3 und 5 sind die zwei Durchgangs-Lichtwellenleiter 7 und 9 derart eingelegt, daß ihre unter 45° angeschliffenen Stirnflächen im Kreuzungsbereich der vier Führungsgräben zusammenstoßen.   In die beiden übrigen Führungsgräben 4 und 6 ist jeweils ein Lichtwellenleiter 8 und 10 mit stumpfer Stirnfläche eingelegt und an die durchgehenden Lichtwellenleiter 7 und 9 herangeführt.   Zum Fixieren der vier Lichtwellenleiter 7 bis 10 kann die Aussparung mit einem transparenten Harz ausgegossen und das Substrat mit den Lichtwellenleitern mit einer Deckplatte bis zum Aushärten des Harzes abgeschlossen werden. Anschließend kann das fertige Verzweigerelement der Form
entnommen werden. In der Fig.2 ist ein Schnitt durch die
Form gemäß der Fig.1 mit eingelegten Lichtwellenleitern
und einer Deckplatte dargestellt. Gleiche Teile sind
mit gleichen Bezugszeichen versehen. Wie dieser Fig.2
zu entnehmen ist, gewährleistet die Auflagefläche des
Substrates 1, daß die vier Lichtwellenleiter 7 bis 10
in einer Ebene angeordnet sind. Die Deckplatte 11 verhindert ein Abheben der Lichtwellenleiter vom Substrat 1
bis zum Aushärten. Wie dieser Figur weiterhin zu entnehmen ist, bestehen zwischen den Durchgangs-Lichtwellenleitern 7 und 9 und den beiden stumpf daran anstoßenden
Lichtwellenleitern 8 und 10 vier Zwickel 12, die Einfügeverluste verursachen könnten. Durch Ausfüllen dieser
Zwickel 12 mit einem transparenten Kunststoff mit entsprechendem Brechungsindex können diese Verluste weitgehend vermieden werden.

Fig.3 zeigt in Draufsicht eine mögliche Halterung 15
zum Schleifen und Polieren der Stirnflächen der Lichtwellenleiter unter 45°. Gestrichelt ist in dieser Figur
eine der Führungsnuten 16 für die Lichtwellenleiter eingezeichnet.

Fig.4 zeigt die Vorderansicht dieser Halterung entsprechend Fig.3. Aus dieser Figur ist der Schichtaufbau der
Halterung mit zwei Glasplatten 17 und 18 und einer dazwischenliegenden Kunststoff-Folie 19 zu erkennen. Die
Dicke der Kunststoff-Folie 19 entspricht dem Durchmesser der zu schleifenden Lichtwellenleiter. Die Führungsnut 16, von der in der Fig.4 die vordere Öffnung durchgezogen und die rückseitige Öffnung gestrichelt dargestellt ist, kann beispielsweise fotolithografisch hergestellt werden.

Bei einer weiteren vorteilhaften Ausführungsform des erfindungsgemäßen Verzweigerelementes wird das Substrat und die Deckplatte nach Fertigstellung des Verzweigerelementes nicht entfernt. Dadurch erhöht sich zunächst bereits die mechanische Stabilität des Verzweigerelementes. Weiterhin kann das Substrat und eventuell die Deckplatte verspiegelt oder aus einem Material mit niedrigerem Brechungsindex hergestellt werden, so daß das dort auftretende Licht wieder größtenteils in die Lichtwellenleiter zurückgeworfen wird. Die Einfügeverluste können damit weiter gesenkt werden.

6 Patentansprüche
4 Figuren

<u>Patentansprüche:</u>

1. Verzweigerelement zur Verteilung von Licht aus einem zuführenden Lichtwellenleiter auf weiterführende Lichtwellenleiter, dadurch g e k e n n z e i c h n e t , daß zwei Lichtwellenleiter (7, 9) mit ihren unter annähernd 45° geschliffenen und polierten Stirnflächen fluchtend auf Stoß zusammengefügt sind, wobei zumindest eine Stirnfläche teilverspiegelt ist, daß im Bereich der Stoßstelle etwa in einer Ebene, die durch die Achsen der Lichtwellenleiter (7, 8) und die Flächennormalen der Stirnflächen aufgespannt ist, senkrecht zu den Achsen mindestens ein weiterer Lichtwellenleiter (8, 10) an den Außendurchmesser der beiden Lichtwellenleiter 7, 9) anstößt und mit diesen mit transparentem Kleber verbunden ist.

2. Verzweigerelement nach Anspruch 1, dadurch g e - k·e n n z e i c h n e t , daß die Lichtwellenleiter (7 bis 10) Stufenindexfasern sind.

3. Verzweigerelement nach Anspruch 1, dadurch g e - k e n n z e i c h n e t , daß die Lichtwellenleiter (7 bis 10) Gradientenindexfasern sind.

4. Verfahren zur Herstellung eines Verzweigerelementes nach einem der Ansprüche 1 bis 3, dadurch g e k e n n z e i c h n e t , daß zwei Lichtwellenleiter (7, 9) an je einem Ende unter 45° geschliffen und poliert werden, daß zumindest eine der so gebildeten Stirnflächen teilverspiegelt wird, daß die beiden Lichtwellenleiter (7, 9) mit ihren Achsen fluchtend auf Stoß zusammengefügt werden, daß senkrecht zu den Achsen in der durch diese und die Flächennormalen der Stirnflächen aufgespannten Ebene mindestens ein weiterer Lichtwellenleiter (8, 10) an den Außendurchmesser der beiden Lichtwellenleiter (7, 9) im Bereich der Stirnflächen angestoßen wird, und daß die Verbindungsstellen (12) zwischen den Lichtwellenleitern (7 bis 10) mit einem transparenten Kleber vergossen werden.

5. Verfahren nach Anspruch 4, dadurch g e k e n n - z e i c h n e t , daß eine Form mit Führungsgräben (3 bis 6) zum Zusammensetzen der Lichtwellenleiter (7 bis 10) verwendet wird.

6. Verfahren nach Anspruch 4 oder 5, dadurch g e - k e n n z e i c h n e t , daß zum Herstellen der unter 45° geschliffenen Stirnflächen eine Halterung (15) aus zwei Glasplatten (17, 18) verwendet wird, zwischen denen die Lichtwellenleiter (7, 9) in Führungsnuten (16) einer Kunststoff-Folie (19) eingespannt sind.

FIG 1

FIG 2

FIG 3

FIG 4

Europäisches
Patentamt

**EUROPÄISCHER RECHERCHENBERICHT**

Nummer der Anmeldung

0035221

EP 81 10 1326.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 2 020 447 (PLESSEY CO. LTD.) <br> * Ansprüche * <br> -- | 1,4 <br><br> 1 |
| | Patents Abstracts of Japan, <br> Band 4, Nr. 1, 8. Januar 1980 <br> Seite 46E163 <br> & JP - A - 54 - 141145 <br> -- | 1 |
| | IBM TECHNICAL DISCLOSURE BULLETIN, <br> Band 16, Nr. 1, Juni 1973 <br> New York <br> H.H. BLOEM et al. "Fiber-Optic Coupler" <br> Seiten 146 bis 147 <br> -- | 4,5 |
| | Patents Abstracts of Japan, <br> Band 3, Nr. 110, 14. September 1979 <br> Seite 119E137 <br> & JP - A - 54 - 87239 <br> -- | 5 |
| A | US - A - 4 176 908 (R.E. WAGNER) <br> * Spalte 4, Fig. 2 * <br> -- | 6 |
| A | US - A - 3 874 779 (F.L. THIEL) <br> * ganzes Dokument * <br> ---- | |

**KLASSIFIKATION DER ANMELDUNG (Int. Cl.³)**

G 02 B 7/26

**RECHERCHIERTE SACHGEBIETE (Int. Cl.³)**

G 02 B 7/26

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 13-05-1981 | FUCHS |